# EUROPEAN PATENT APPLICATION

(11) **EP 4 737 225 A1**
(43) Date of publication of application: **06.05.2026**
(21) Application number: 24830513.8
(22) Date of filing: 14.06.2024
(51) Int. Cl.: B60R 21/18, B60R 21/207, B60R 22/18, B60R 22/34, B60R 22/46

(54) **PRE-TENSIONING AND FORCE-LIMITING MECHANISM AND VEHICLE SAFETY DEVICE**

(30) Priority: 28.06.2023 CN 202310777406
(71) Applicant: Yanfeng International Automotive Technology Co., Ltd., Shanghai 201306 (CN)
(72) Inventor: LIU, Chongqing, Shanghai 201315 (CN); ZHAO, Wei, Shanghai 201315 (CN); ZHENG, Shenghui, Shanghai 201315 (CN); YANG, Lun, Shanghai 201315 (CN)
(74) Representative: Reitstötter Kinzebach
(86) International application number: PCT/CN2024/099110
(87) International publication number: WO 2025/001867

(57) **Abstract**

The present disclosure provides a pre-tightening and force-limiting mechanism and a vehicle safety device. The pre-tightening and force-limiting mechanism (100) comprises: a tube body (10); a pre-tightening assembly mounted in the tube body (10) and comprising a moving component and a force-transmitting component which are adapted to reciprocate in the tube body (10); and a force-limiting assembly mounted in the tube body (10) and comprising a force-limiting component which moves in cooperation with the pre-tightening assembly. The pre-tightening and force-limiting mechanism is configured to be switchable between a pre-tightening state in which the moving component is driven and drives the force-transmitting component to move in a first direction (D1) to realize pre-tightening, and a force-limiting state in which the moving component is driven by the force-transmitting component to move in a second direction (D2) opposite to the first direction (D1) and to realize force-limiting by the force-limiting component. The pre-tightening and force-limiting mechanism of the present disclosure provides a bidirectional constraint structure integrating the pre-tightening function and the force-limiting function, which alleviates the force acting on the driver and the passenger and reduces the injury to the human body. The pre-tightening and force-limiting mechanism has a compact overall structure and is simple to manufacture, which can preset the resistance of load or force limiting according to different crashability.

## Description

### FIELD

The present disclosure relates to the technical field of vehicles, and in particular to a pre-tightening and force-limiting mechanism having both pre-tightening function and force-limiting function, and a vehicle safety device having the pre-tightening and force-limiting mechanism.

### BACKGROUND

With the increasing demand of vehicle safety products for passenger protection, the demand for pre-tightening devices in the market is increasing, and the configuration rate of pre-tightening products of various vehicle models is getting higher and higher. Such products include, for example, waist pre-tensioner, pre-tightening plug lock (or buckle), airbag tensioner, etc. The pre-tightening device is usually equipped with a gas generator. In the process of collision, after the gas generator is triggered according to ignition strategy and instruction signal, the gas generator quickly releases gas to generate a pre-tightening force and realize locking, thus restraining driver and passenger and preventing the human body from moving excessively and colliding with steering wheel or vehicle interior trim to cause injury.

Conventional technologies and products in the market are one-way pre-tightening devices, that is, the pre-tightening device is locked after the gas generator is ignited to realize pre-tightening when the passenger have an inevitable collision, which will cause greater compression force to the passenger at the peak of load and may cause greater compression injury. For example, a safety belt pre-tightening plug lock and a pre-tightening fixed point are locked immediately after pre-tightening, and there is no force limiting function, and no buffer can be performed during the process of restraining the driver and the passenger to further reduce injuries. Thus, in some solutions, a force limiting device is provided. The purpose of the force limiting device is to appropriately reduce the peak of load during forward movement of the driver and the passenger in the event of a vehicle collision, thereby limiting the force exerted on the driver and the passenger. The force limiting device of the safety belt is generally integrated on a safety belt pre-contracting retractor, the addition of the force limiting device inevitably requires additional relatively increased mounting space, and the activation or triggering of the pre-tightening device and the force limiting device needs to cooperate with each other, which also increases the control cost.

### SUMMARY

The purpose of the present disclosure is to provide a pre-tightening and force-limiting mechanism with pre-tightening function and force-limiting function to solve the problems in the prior art. By combining the pre-tightening function with the force-limiting function, the pre-tightening force can be provided and the collision kinetic energy can be absorbed at the same time during collision, which provides appropriate constraints for the driver and passenger and realizes safe and reliable protection.

To this end, according to an aspect of the present disclosure, a pre-tightening and force-limiting mechanism is provided. The pre-tightening and force-limiting mechanism comprises: a tube body; a pre-tightening assembly mounted in the tube body and comprising a moving component and a force-transmitting component which are adapted to reciprocate in the tube body; and a force-limiting assembly mounted in the tube body and comprising a force-limiting component which moves in cooperation with the pre-tightening assembly, wherein the pre-tightening and force-limiting mechanism is configured to be switchable between a pre-tightening state in which the moving component is driven and drives the force-transmitting component to move in a first direction to realize pre-tightening, and a force-limiting state in which the moving component is driven by the force-transmitting component to move in a second direction opposite to the first direction and to realize force-limiting by the force-limiting component.

According to the above technical concept, the present disclosure may further include any one or more of the following alternative forms.

In some alternative forms, the moving component is switched immediately from the pre-tightening state to the force-limiting state by the force-transmitting component after the moving component is moved and completes the pre-tightening.

In some alternative forms, the tube body is provided with a first tube opening connected to a driving component and an opposite second tube opening, and the second tube opening is provided with a contracting portion to define a pre-tightening limit position.

In some alternative forms, the driving component comprises a gas generator, and in the force-limiting state, the moving component overcomes gas pressure in the tube body during movement in the second direction to realize the force-limiting.

In some alternative forms, the pre-tightening assembly further comprises a limiting block attached to the force-transmitting component and/or the moving component, and the limiting block is provided with a stop portion matched with the contracting portion.

In some alternative forms, the moving component is configured as a piston, and the piston is in sealing engagement with an inner wall of the tube body and is provided with a through hole through which the force-transmitting component extends.

In some alternative forms, the force-transmitting component is configured as a webbing or a tension cable.

In some alternative forms, the piston comprises a piston seat and a piston body extending from the piston seat toward the first direction, the piston seat is in sealing engagement with the inner wall of the tube body, the piston body has a first end connected to the piston seat and a second end increasing in size from the first end, and the second end is engaged with the inner wall of the tube body.

In some alternative forms, the force-limiting assembly comprises a ball seat disposed between the piston seat and the piston body, and the force-limiting component is configured as a friction ball movable between the ball seat and the piston body.

In some alternative forms, the ball seat is provided with a limiting groove arranged circumferentially, in the pre-tightening state, the friction ball is limited in the limiting groove, and in the force-limiting state, the friction ball moves along the surface of the piston body in the first direction and engages with the inner wall of the tube body.

In some alternative forms, the ball seat is provided with a plurality of limiting grooves arranged circumferentially, and the force-limiting assembly adjusts a preset resistance by adjusting the positions and/or the number of the friction balls in the plurality of limiting grooves.

In some alternative forms, the material of the friction ball is any one of metal, ceramic, polymer, and composite material.

According to another aspect of the present disclosure, a vehicle safety device is further provided. The vehicle safety device is applicable to any one of safety seat, airbag tightening device and safety buckle, and comprises a gas generator and the above pre-tightening and force-limiting mechanism, and a tube body of the pre-tightening and force-limiting mechanism is connected to the gas generator.

The pre-tightening and force-limiting mechanism of the present disclosure provides a bidirectional constraint structure integrating the pre-tightening function and the force-limiting function, which will not be locked after realizing the pre-tightening, but will realize a reversely force-limiting function to absorb the collision kinetic energy, so as to relieve the force acting on the driver and the passenger, and reduce the damage to the human body. In addition, the pre-tightening and force-limiting mechanism of the present disclosure has a compact overall structure and is simple to manufacture with low cost, which can preset the resistance of load or force limiting according to different crashability, and is suitable for various occasions to meet collision safety performance requirements of systems and diversified requirements of users.

### BRIEF DESCRIPTION OF THE DRAWINGS

Other features and advantages of the present disclosure will be better understood from the following detailed description of alternative embodiments in conjunction with the accompanying drawings, in which like reference numerals identify the same or similar components, and in which:
FIG. 1 is a schematic cross-sectional view of a pre-tightening and force-limiting mechanism according to an embodiment of the present disclosure which is applied to a vehicle safety device;
FIG. 2 is a schematic view of a piston in the pre-tightening and force-limiting mechanism of FIG. 1, illustrating a manner of implementing force-limiting by using friction balls;
FIG. 3 illustrates several different arrangements of the friction balls on a ball seat;
FIG. 4 is a schematic cross-sectional view of the pre-tightening and force-limiting mechanism in FIG. 1 at a pre-tightening limit position;
FIG. 5 is an enlarged schematic view of part A in FIG. 4, illustrating a state of the friction balls in a pre-tightening state;
FIG. 6 is a schematic view of the pre-tightening and force-limiting mechanism of FIG. 1 in a force-limiting state;
FIG. 7 is an enlarged schematic view of part B in FIG. 6, illustrating a state of the friction balls in the force-limiting state;
FIG. 8 is a schematic view of the pre-tightening and force-limiting mechanism according to the present disclosure which is applied to an airbag tightening device;
FIG. 9 is a schematic view of the pre-tightening and force-limiting mechanism according to the present disclosure which is applied to a vehicle waist pre-tensioner;
FIG. 10 is a schematic view of the pre-tightening and force-limiting mechanism according to the present disclosure which is applied to a vehicle pre-tightening buckle.

### DETAILED DESCRIPTION OF EMBODIMENTS

The implementation and use of the embodiments are discussed in detail below. However, it should be understood that the specific embodiments discussed merely exemplify the specific ways of implementing and using the present disclosure, and do not limit the scope of the disclosure. When describing the structural positions of various components, such as the directions of upper, lower, top, bottom, etc., the description is not absolute, but relative. When the various components are arranged as shown in the figures, these directional expressions are appropriate, but when the positions of the various components in the figures would be changed, these directional expressions would also be changed accordingly.

In this context, the expression "comprise" or similar expressions "contain" and "has" and so on which are synonymous are open, and do not exclude additional unlisted elements, steps or ingredients.

In this context, the terms "first", "second" and so on are not used to limit the sequence and the number of components unless otherwise stated.

In this context, unless otherwise specifically defined, terms such as "mount", "connect" or "attach" should be understood broadly, for example, it may be fixed connection, detachable connection, or integrated; it may be directly connected, an indirectly connected through an intermediate medium, or it may be internal communication between two components or interaction relationship between two components. For those skilled in the art, the specific meanings of the above terms in this context can be understood according to specific situations.

It should be understood that the pre-tightening and force-limiting mechanism of the present disclosure is applicable to various suitable means of transportation, and the term "means of transportation" includes, but is not limited to, vehicle, boat, airplane, etc., wherein "vehicle" includes fuel vehicle, hybrid vehicle, electric vehicle, hydrogen powered vehicle, etc., and may be of various vehicle models, such as small automobile, bus, rail vehicle, etc. Hereinafter, an application environment of the pre-tightening and force-limiting mechanism is mainly described by a vehicle safety device of a small automobile, but it is not excluded that the present disclosure may be applied to other types of means of transportation.

In a pre-tightening device of an existing vehicle, such as waist pre-tensioner, pre-tightening buckle, airbag pre-tensioner, etc., a gas generator is usually provided for generating a pre-tightening force, and once triggered and activated, a gas is generated to act on an actuating component such as a piston to move the actuating component, and a webbing or a steel wire rope is pulled by a connecting component to play a pre-tightening role. For example, after being triggered according to the ignition strategy and instruction, the waist pre-tensioner drives the safety belt by the connecting component to eliminate the gap between the driver and the safety belt; the pre-tightening buckle is connected with a locking tongue, and the safety belt is tightened by the locking tongue after being triggered according to the ignition strategy and instruction, so that a better pre-tightening effect can be achieved when cooperating with the waist pre-tensioner; the airbag pre-tensioner can be mounted on a seat back and connected with an airbag tightening belt, and after being triggered according to the ignition strategy and instruction, the airbag pre-tensioner tightens the airbag tightening belt, so as to adjust the airbag to an optimal protection position.

It has been realized that the existing pre-tightening devices all realize one-way pre-tightening, which are locked after the pre-tightening function is realized, and have no force-limiting function, that is, the collision energy cannot be absorbed, so that the pressure exerted on the driver and the passenger cannot be reduced, which will cause great compression damage to the driver and the passenger at the peak of pressure. The additional force limiting device requires additional installation space and requires coordination with the activation or triggering of the pre-tightening device, which is complicated to implement and costly. Thus, considering the space and cost, it is an economical and effective way to combine the pre-tightening function with the force-limiting function. According to the concept of the present disclosure, a pre-tightening and force-limiting mechanism with bidirectional constraint is provided, which provides a force-limiting function after realizing a pre-tightening function with a simple and compact structural design and economic cost efficiency on the premise of not significantly changing the pre-tightening device, and appropriately reduces the load imposed on the body of the driver and the passenger during the collision.

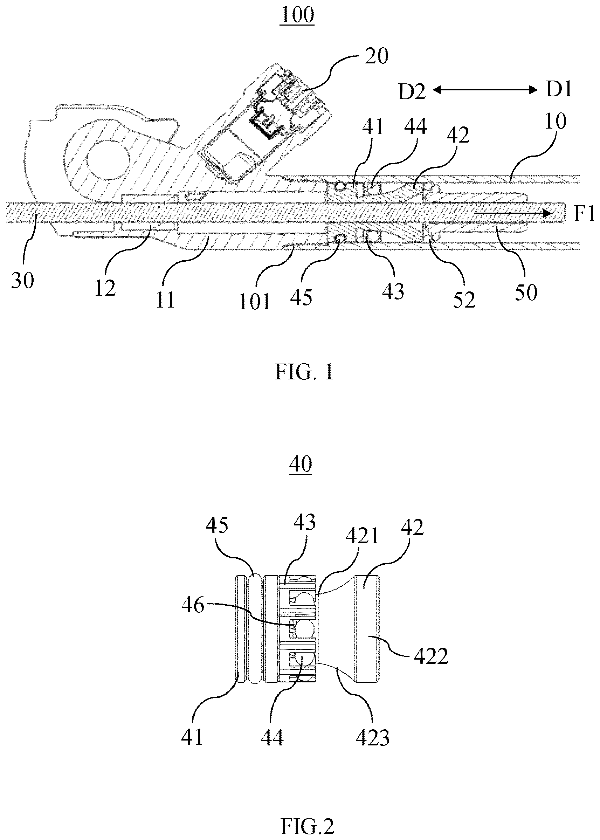

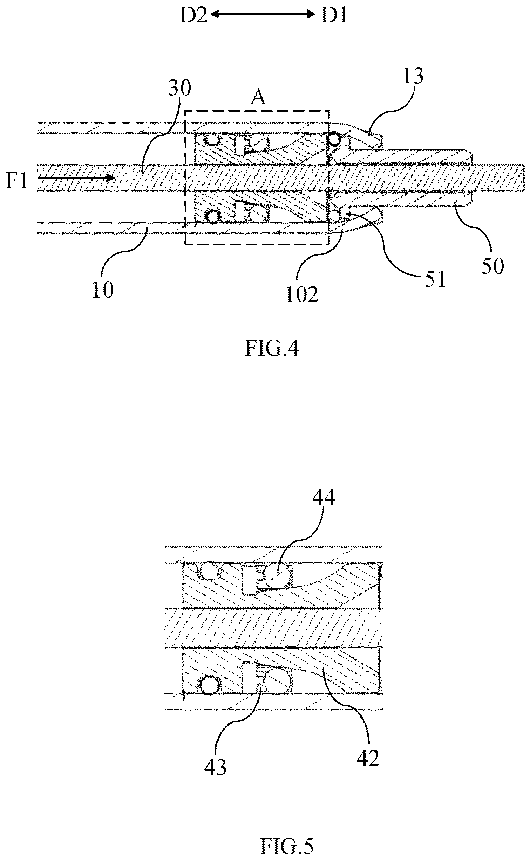

Referring to FIG. 1 to FIG. 7, a pre-tightening and force-limiting mechanism 100 includes a tube body 10, a pre-tightening assembly and a force-limiting assembly. The tube body 10 is provided with a first tube opening 101 connected to a driving component and an opposite second tube opening 102, wherein the driving component comprises a gas generator 20, the first tube opening 101 is connected to the gas generator 20 via an intake manifold 11, and is provided with a sealing sleeve 12 matched with the intake manifold 11 to realize sealing. As shown in FIG. 4, the second tube opening 102 is provided with a contracting portion 13 to define a pre-tightening limit position, and thus the pre-tightening is stopped when the pre-tightening assembly moves to the pre-tightening limit position.

According to the present disclosure, the pre-tightening assembly is mounted in the tube body 10, and includes a moving component and a force-transmitting component suitable for reciprocating movement in the tube body 10. In this way, the pre-tightening and force-limiting mechanism can be switched between a pre-tightening state and a force-limiting state, wherein in the pre-tightening state, the moving component is driven by the gas generated by the gas generator 20 and drives the force-transmitting component to move in a first direction (for example, a direction D1 in FIG. 1) to realize pre-tightening, and in the force-limiting state, the moving component is driven by the force-transmitting component to move in a second direction (for example, a direction D2 in FIG. 1) opposite to the first direction, so as to overcome the gas pressure during the movement and realize force-limiting by the force-limiting component. Therefore, unlike the existing one-way pre-tightening device, the pre-tightening and force-limiting mechanism of the present disclosure realizes bidirectional constraint, that is, it is not locked after realizing the pre-tightening, but can reversely move to release the pre-tightening force to a certain extent, thereby reducing the compression force or excessive load on the driver and the passenger. Further, by setting different resistances provided by the force-limiting assembly during reverse movement according to different requirements, the pre-tightening and force-limiting mechanism of the present disclosure can be applied to various occasions to realize the force-limiting function.

Advantageously, after the pre-tightening is completed by the movement of the moving component, the moving component is switched from the pre-tightening state to the force-limiting state immediately by the force-transmitting component. That is, after the moving component drives the force-transmitting component to move and realizes the pre-tightening function, there is no locking or unlocking process, and the moving component is directly switched from the pre-tightening state to the force-limiting state. This can be realized by releasing the pre-tightening force accumulated by the force-transmitting component itself during the pre-tightening process. When the moving component and the force-transmitting component move to a pre-tightening stroke, the force-transmitting component releases the pre-tightening force, and automatically drives the moving component to move reversely by the released force. During this process, the moving component continuously overcomes the gas pressure and the force-limiting component realizes the force-limiting, which avoids the problem of incoordination caused by the activation or trigger control of the pre-tightening function and the force-limiting function respectively in the prior art, the state switching is effective and reliable, and the cost is low.

It should be understood that for different application environments, the pre-tightening stroke may be different, the length of the pre-tightening stroke is related to the load, and the larger the load, the smaller the stroke. When the load is large, the pre-tightening automatically ends after reaching balance. The magnitude of the pre-tightening force also depends on the load, and the pre-tightening force threshold required for ensuring the pre-tightening is, for example, about 1.5kN to 2kN. In the state shown in FIG. 4, the pre-tightening assembly moves to the pre-tightening limit position. However, in some cases, the pre-tightening assembly does not need to move to the pre-tightening limit position, but starts to move reversely in the second direction D2 after moving to a position where provides the set pre-tightening force threshold in the first direction D1 along the tube body 10.

As can also be seen from FIG. 4, in some embodiments, the pre-tightening assembly further includes a limiting block 50 attached to the force-transmitting component and/or the moving component, and the limiting block 50 is provided with a stop portion 51 matched with the contracting portion 13 of the tube body 10 to prevent the pre-tightening assembly and/or the force-limiting assembly from falling off the tube body. In some embodiments, a buffer ring 52 may be attached to the limiting block 50 to relieve vibration generated when the limiting block collisions the contracting portion 13.

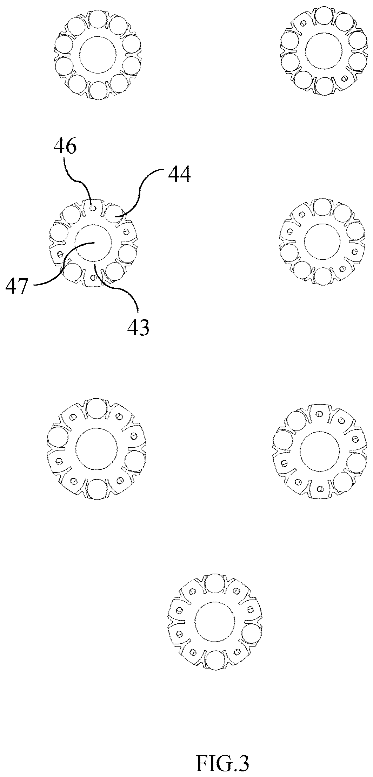

With reference to FIG. 1 and FIG. 2, the pre-tightening assembly implementing the pre-tightening function may adopt any suitable form in the prior art, such as piston pre-tensioner, mechanical pre-tensioner, etc. In the illustrated embodiment, the moving component is configured as a piston 40 sealed and engaged with an inner wall of the tube body 10 and provided with a through hole 47 (FIG. 3) through which the force-transmitting component extends. Depending on different application environments, the force-transmitting component may be configured as a webbing or a tension cable 30 or other suitable form. The limiting block 50 may be attached to the tension cable 30, for example, by press-riveting, and abut against the piston 40, so that the tension cable 30, the piston 40 and the limiting block 50 can move cooperatively. It should be understood that, in a manner in which the limiting block 50 is not provided, the piston 40 may be fixedly connected to the tension cable 30, so that the tension cable 30 and the piston 40 can move cooperatively. When the gas generator 20 receives the ignition instruction to be ignited and exploded, the generated high-pressure gas enters the tube body 10 from the intake manifold 11 and provides a thrust F1 to drive the piston 40 and the limiting block 50 together with the tension cable 30 to move along the first direction D1, so as to tighten the tension cable 30 to realize the pre-tightening function. The tension cable 30 is tensioned while accumulating the pre-tightening force.

In the illustrated embodiment, the piston 40 includes a piston seat 41 and a piston body 42 extending from the piston seat 41 toward the first direction D1, wherein the piston seat 41 is in sealing engagement with the inner wall of the tube body 10, for example, the piston seat 41 is provided with a clamping groove to accommodate a sealing ring 45, and the piston body 42 has a portion engaged with the inner wall of the tube body 10. It should be understood that when the tension cable 30 reversely releases the pre-tightening force to drive the piston 40 to move in the second direction D2, the engagement of the piston seat 41 and the piston body 42 with the inner wall of the tube body 10 can play a role of providing resistance to a certain extent, and the sealed high-pressure gas inside the tube body 10 also plays a role of providing resistance. In other words, the piston 40 moves in the second direction D2 while continuously overcoming the gas pressure in the tube body 10 to absorb the collision energy (similar to a gas spring), thereby achieving the force-limiting function.

In some embodiments, the piston body 42 has a first end 421 connected to the piston seat 41 and a second end 422 increasing in size from the first end 421, wherein the second end 422 is engaged with the inner wall of the tube body 10. In this way, the piston body 42 is formed with an inclined surface 423, and the inclined surface 423 provides a space for the force-limiting component to move in a force-limiting stroke.

In some embodiments, the force-limiting assembly includes a ball seat 43 disposed between the piston seat 41 and the piston body 42, and the force-limiting component is configured as friction balls 44 movable between the ball seat 43 and the piston body 42. The force-limiting function is realized by the movement of the friction balls 44 along the inclined surface 423 of the piston body 42 in the first direction D1.

Specifically, as shown in FIG. 2 and FIG. 3, the ball seat 43 is provided with a limiting groove 46 arranged circumferentially, in the pre-tightening state, the friction balls 44 are limited in the limiting groove 46, and in the force-limiting state, the friction balls 44 move out of the limiting groove 46 and move along the surface (the inclined surface 423) of the piston body 42 to engage with the inner wall of the tube body 10, thereby providing resistance, which will be described in further detail below.

It should be understood that the size of the friction ball 44 is associated with the distance between the inclined surface 423 of the piston body 42 and the inner wall of the tube body 10, and "associated" here refers to that in the pre-tightening state, the friction ball 44 limited in the limiting groove is in contact with the inner wall of the tube body 10 but has no force or almost no force therebetween, so that the movement of the piston along the first direction D1 is not hindered; on the contrary, in the force-limiting state, friction is generated between the friction ball 44 and the inner wall of the tube body 10, so that the friction ball 44 gradually moves along the inclined surface 423 in the first direction D1, and during this process, both the inclined surface 423 and the inner wall of the tube body 10 are squeezed/deformed with the friction ball 44 to absorb energy, thereby generating friction force/resistance, and realizing the force-limiting function, so that excessive load will not be imposed on the body of the driver and the passenger, thereby avoiding injury to the human body.

In some embodiments, the ball seat 43 is provided with a plurality of limiting grooves 46 arranged circumferentially, for example, ten limiting grooves 46 exemplarily shown in FIG. 3, and the force-limiting assembly can adjust a preset resistance by adjusting the positions and/or the number of the friction balls 44 in the plurality of limiting grooves 46. FIG. 3 exemplarily illustrates the distribution of 10, 8, 6, 4 and 3 friction balls 44 in the limiting grooves 46. It should be understood that the number of the limiting grooves and the number and distribution of the friction balls may be reasonably designed depending on different requirements, as long as they can provide substantially uniform and appropriate resistance.

Further, in addition to the positions and/or the number of the friction balls, the resistance may be adjusted by the material of the friction balls. Optionally, the material of the friction ball is any one of metal, ceramic, polymer and composite material. For example, aluminum ball or plastic ball and the like can be selected. In some embodiments, the material of the tube body and/or the piston may also be selected to have a certain degree of deformation, such as metal or polymer, etc.

The process of achieving the pre-tightening and the force-limiting by the pre-tightening and force-limiting mechanism of the present disclosure is described below with reference to FIGS. 4 to 7.

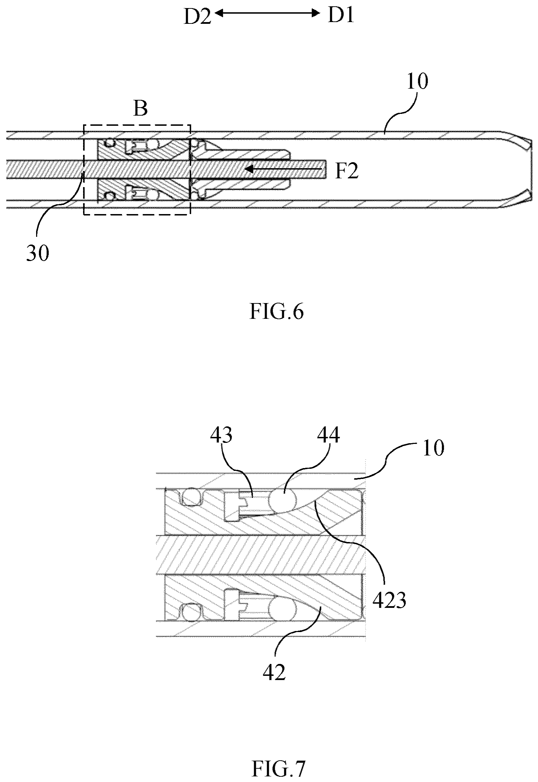

FIG. 4 illustrates the piston at the pre-tightening limit position under the action of the thrust F1 of the high-pressure gas, at this time, the stop portion 51 of the limiting block 50 and the contracting portion 13 of the tube body 10 abut against each other for limiting. As described above, depending on the pre-tightening stroke of different practical applications, the piston does not necessarily move to the pre-tightening limit position. In the pre-tightening state, the friction balls 44 are limited in the limiting grooves of the ball seat 43 and do not generate acting force with the inner wall of the tube body 10, as shown in FIG. 5. When the pre-tightening stroke is reached, the tension cable 30 releases the pre-tightening force and provides a reverse pulling force F2, as shown in FIG. 6, the tension cable 30 drives the limiting block 50 and moves together with the piston in the second direction D2 to enter the force-limiting state. At this time, specifically referring to FIG. 7, the friction balls 44 move out of the ball seat 43 and move along the inclined surface 423, squeeze/deform with the inclined surface 423 and the inner wall of the tube body 10 respectively and generate friction force/resistance, so as to absorb the collision energy to eliminate the peak of load, relieve the compression on the body of the driver and the passenger, and realize the force-limiting function.

By combining the pre-tightening function and the force-limiting function, the pre-tightening and force-limiting mechanism of the present disclosure not only solves the problem of spatial arrangement in the prior art, but also effectively solves the problem that the pre-tightening function and the force-limiting function are triggered and coordinated with each other when a collision occurs, and can reliably protect the driver and the passenger. In addition, the pre-tightening and force-limiting mechanism of the present disclosure does not greatly modify the existing pre-tightening device, and advantageously adds the force-limiting assembly to provide the force-limiting function, so that the product has small volume, low cost and provides stable and reliable force limiting transmission.

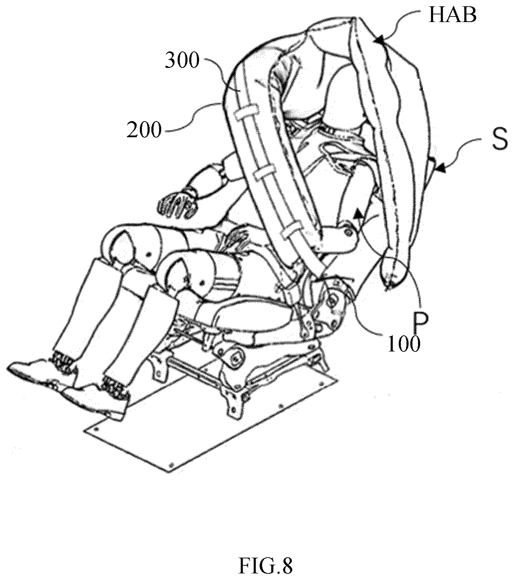

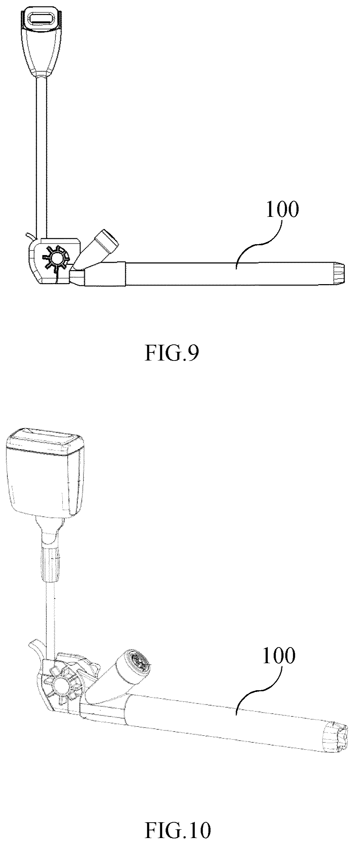

Further, the present disclosure also provides a vehicle safety device, which is applicable to any one of safety seat, airbag tightening device and safety buckle, and includes a gas generator and the pre-tightening and force-limiting mechanism 100 described above, wherein the tube body of the pre-tightening and force-limiting mechanism is connected to the gas generator. FIG. 8 illustrates an example of the pre-tightening and force-limiting mechanism applied to an airbag tightening device, FIG. 9 illustrates an example of the pre-tightening and force-limiting mechanism applied to a waist pre-tensioner of a safety seat, and FIG. 10 illustrates an example of the pre-tightening and force-limiting mechanism applied to a pre-tightening buckle of a safety belt. Depending on collision safety performance requirements of different systems, by adjusting the pressure of the gas sealed inside the tube body, as well as the number, positions and material of the friction balls, the force-limiting function with the preset resistance can be realized, and the proper constraint on the driver and the passenger can be obtained. For example, when applied to the airbag pre-tensioner, the pre-tightening and force-limiting mechanism can absorb the energy of the upper body of the driver and the passenger together with the safety belt/airbag to reduce the chest pressure; when applied to the waist pre-tensioner and the pre-tightening buckle, the compression force on the waist of the driver and the passenger can be reduced to a certain extent. Taking the airbag tightening device shown in FIG. 8 as an example, the pre-tightening and force-limiting mechanism 100 of the present disclosure may be mounted on a seat back S and connected with an airbag tightening belt 300. After a head airbag (HAB) is triggered to deploy according to the ignition strategy and instruction, the airbag tightening belt 300 is firstly tightened (pre-tightening action) to tighten the airbag to a suitable pre-tightening position. When the head and chest of the driver and the passenger P are in contact with an air bag portion 200, the air bag tightening belt 300 is pulled out (force-limiting action) to absorb the collision kinetic energy of the driver and the passenger P and avoid causing injury to the driver and the passenger P.

It should be understood here that the embodiments shown in the drawings only illustrate the optional architectures, shapes, sizes and arrangements of the pre-tightening and force-limiting mechanism and the applied vehicle safety device according to the present disclosure; however, it is only illustrative rather than restrictive, and other shapes, sizes and arrangements can be adopted without departing from the spirit and scope of the present disclosure.

It is noted that this invention (e.g., the inventive concepts, etc.) has been described in the specification and/or illustrated in the drawings of this patent document according to exemplary embodiments; the embodiments of this invention are set forth by way of example only, and are not intended as limitations on the scope of the invention. The structure and/or arrangement of the elements of the inventive concepts embodied in the disclosure as described in the specification and/or illustrated in the drawings are illustrative only. Although exemplary embodiments of the invention have been described in detail in this patent document, those of ordinary skill in the art will readily appreciate that equivalents, modifications, variations, etc. to the subject matter of the exemplary embodiments and alternative embodiments are possible and are considered to be within the scope of the invention; all such subject matter (e.g., modifications, variations, embodiments, combinations, equivalents, etc.) is intended to be encompassed within the scope of the invention. It should also be noted that various/other modifications, variations, substitutions, equivalents, changes, omissions, and the like can be made in the configuration and/or arrangement of the exemplary embodiments (e.g., in terms of concepts, designs, structures, arrangements, forms, assemblies, constructions, means, functions, systems, processes/methods, steps, order of process/method steps, operations, operating conditions, performance, materials, compositions, combinations, etc.) without departing from the scope of the invention; and all such subject matter (e.g., modifications, variations, embodiments, combinations, equivalents, etc.) is intended to be included within the scope of the invention. The scope of the invention is not intended to be limited to the subject matter (e.g., the details, structures, functions, materials, acts, steps, sequences, systems, results, etc.) described in the specification and/or figures of this patent document. It is appropriate that the claims of this patent document be construed to cover the full breadth of the subject matter of the present disclosure (e.g., including any and all such modifications, variations, embodiments, combinations, equivalents, etc.); it is to be understood that the terminology used in this patent document is intended to provide a description of the subject matter of the exemplary embodiments and is not intended to limit the scope of the present disclosure.

It should also be noted that, in accordance with exemplary embodiments, the invention can comprise conventional techniques (e.g., techniques embodied in, and/or integrated with, exemplary embodiments, modifications, variations, combinations, equivalents), or can comprise any other suitable technique (now and/or in the future) having the capability to perform the functions and processes/operations described in the specification and/or illustrated in the drawings. All such techniques, e.g., technologies implemented in examples, adaptations, variations, combinations, equivalents, etc., are considered to be within the scope of the invention of this patent document.

## Claims

1. A pre-tightening and force-limiting mechanism (100), comprising:
a tube body (10);
a pre-tightening assembly mounted in the tube body (10) and comprising a moving component and a force-transmitting component which are adapted to reciprocate in the tube body (10); and
a force-limiting assembly mounted in the tube body (10) and comprising a force-limiting component which moves in cooperation with the pre-tightening assembly;
wherein the pre-tightening and force-limiting mechanism is configured to be switchable between a pre-tightening state in which the moving component is driven and drives the force-transmitting component to move in a first direction (D1) to realize pre-tightening, and a force-limiting state in which the moving component is driven by the force-transmitting component to move in a second direction (D2) opposite to the first direction (D1) and to realize force-limiting by the force-limiting component.

2. The pre-tightening and force-limiting mechanism (100) according to claim 1, wherein the moving component is switched immediately from the pre-tightening state to the force-limiting state by the force-transmitting component after the moving component is moved and completes the pre-tightening.

3. The pre-tightening and force-limiting mechanism (100) according to claim 1, wherein the tube body (10) is provided with a first tube opening (101) connected to a driving component and an opposite second tube opening (102), and the second tube opening (102) is provided with a contracting portion (13) to define a pre-tightening limit position.

4. The pre-tightening and force-limiting mechanism (100) according to claim 3, wherein the driving component comprises a gas generator (20), and in the force-limiting state, the moving component overcomes gas pressure in the tube body (10) during movement in the second direction (D2) to realize the force-limiting.

5. The pre-tightening and force-limiting mechanism (100) according to claim 3, wherein the pre-tightening assembly further comprises a limiting block (50) attached to the force-transmitting component and/or the moving component, and the limiting block (50) is provided with a stop portion (51) matched with the contracting portion (13).

6. The pre-tightening and force-limiting mechanism (100) according to any one of claims 1 to 5, wherein the moving component is configured as a piston (40), and the piston (40) is in sealing engagement with an inner wall of the tube body (10) and is provided with a through hole (47) through which the force-transmitting component extends.

7. The pre-tightening and force-limiting mechanism (100) according to claim 6, wherein the force-transmitting component is configured as a webbing or a tension cable (30).

8. The pre-tightening and force-limiting mechanism (100) according to claim 6, wherein the piston (40) comprises a piston seat (41) and a piston body (42) extending from the piston seat (41) toward the first direction (D1), the piston seat (41) is in sealing engagement with the inner wall of the tube body (10), the piston body (42) has a first end (421) connected to the piston seat (41) and a second end (422) increasing in size from the first end (421), and the second end (422) is engaged with the inner wall of the tube body (10).

9. The pre-tightening and force-limiting mechanism (100) according to claim 8, wherein the force-limiting assembly comprises a ball seat (43) disposed between the piston seat (41) and the piston body (42), and the force-limiting component is configured as a friction ball (44) movable between the ball seat (43) and the piston body (42).

10. The pre-tightening and force-limiting mechanism (100) according to claim 9, wherein the ball seat (43) is provided with a limiting groove (46) arranged circumferentially, in the pre-tightening state, the friction ball (44) is limited in the limiting groove (46), and in the force-limiting state, the friction ball (44) moves along the surface of the piston body (42) in the first direction (D1) and engages with the inner wall of the tube body (10).

11. The pre-tightening and force-limiting mechanism (100) according to claim 10, wherein the ball seat (43) is provided with a plurality of limiting grooves (46) arranged circumferentially, and the force-limiting assembly adjusts a preset resistance by adjusting the positions and/or the number of the friction balls (44) in the plurality of limiting grooves (46).

12. The pre-tightening and force-limiting mechanism (100) according to claim 9, wherein the material of the friction ball (44) is any one of metal, ceramic, polymer, and composite material.

13. A vehicle safety device, wherein the vehicle safety device is applicable to any one of safety seat, airbag tightening device and safety buckle, and comprises a gas generator (20) and a pre-tightening and force-limiting mechanism (100) according to any one of claims 1 to 12, and a tube body (10) of the pre-tightening and force-limiting mechanism (100) is connected to the gas generator (20).
